# EUROPÄISCHE PATENTSCHRIFT

(11) **EP 2 791 068 B1**
(45) Veröffentlichungstag und Bekanntmachung des Hinweises auf die Patenterteilung: **12.08.2015**
(21) Anmeldenummer: 12809605.4
(22) Anmeldetag: 14.12.2012
(51) Int. Cl.: C02F 3/10, C02F 3/06

(54) **FESTBETTREAKTOR**
FIXED BED REACTOR
RÉACTEUR À LIT FIXE

(30) Priorität: 16.12.2011 DE 102011122170
(43) Veröffentlichungstag der Anmeldung: 22.10.2014
(73) Patentinhaber: Aqua-Biocarbon GmbH, 38644 Goslar (DE)
(72) Erfinder: MARTIN, Ernst-Joachim, 38640 Goslar (DE); KARL, Peter, 38644 Goslar (DE)
(74) Vertreter: Stornebel, Kai
(86) Internationale Anmeldenummer: PCT/EP2012/005157
(87) Internationale Veröffentlichungsnummer: WO 2013/087213

(56) Entgegenhaltungen:
- EP-A1- 2 067 750
- WO-A1-93/02971
- US-A- 6 153 094
- US-A- 6 159 365
- US-A1- 2007 193 950
- US-A1- 2009 301 937

## Beschreibung

Die Erfindung betrifft einen Festbettreaktor zur Reinigung von Abwässern, insbesondere zur biologischen Reinigung industrieller Abwässer, mit einem Reaktorbehälter mit einem Boden und Wänden, die ein Becken bilden, in dem ein Festbett aus einem körnigen Füllmaterial angeordnet ist und das einen Zulauf für das zu reinigende Abwasser und einen Ablauf für das gereinigte Wasser aufweist. Solch ein Festbettreaktor ist insbesondere für die biologische Reinigung von industriellen Abwässern mit biologisch schwer abbaubaren Verunreinigungen geeignet.

Die DE 24 18 586 A1 betrifft eine Einrichtung und ein Verfahren zur biologischen Reinigung von Abwasser oder Wasser in Klärteichen oder Kläranlagen oder Teichen und Seen oder Flüssen. Zur verbesserten Einbringung von Sauerstoff für sonst ruhende, biologisch zu reinigende Wassermassen ist die Anordnung von Luft-Wasser-Strahlern innerhalb eines Klärbeckens oder eines Klärteiches vorgesehen. Der Klärteich ist durch Trennwände in eine lange, in sich geschlossene Fließstrecke aufgeteilt. In einer Ausführungsform sind die Trennwände mit auf einer Teichsohle liegendem Fundamentbalken ausgestattet, in dessen Schlitz Asbestzementplatten eingesteckt sind. Weiterhin sind hängende Trennwände dargestellt, die durch mit Luft gefüllte, leichte Rohre getragen werden. Am unteren Ende der Trennwand sind Gewichte angeordnet, so dass die Trennwände ganz oder fast auf der Teichsohle aufliegen. Beide Bauarten können miteinander kombiniert werden.

Die DE 89 01 570 U1 betrifft eine Vorrichtung zum Reinigen von kommunalen und industriellen Abwässern mit einem Zulauf, einem Ablauf, einem Tauchkörper als Aufwuchsfläche für Mikroorganismen, eine Begasungsanlage unter dem Tauchkörper, einem trichterförmigen Boden, einer Umwälzanlage für den ausfallenden Schlamm und einem Inspektionsschacht. Über die Umwälzanlage wird der Schlamm wenigstens teilweise direkt in den Tauchkörper eingeführt. In dem Behälter sind Trennflächen eingebaut, die das zulaufende, kalte Abwasser von dem warmen, geklärten Abwasser trennen, so dass durch die Trennflächen hindurch ein Wärmeaustausch stattfindet. Der Tauchkörper kann in mehrere konzentrische bzw. parallele Tauchkörper aufgeteilt sein, zwischen denen Fließzonen für das warme Abwasser gebildet sind.

Die 35 36 349 A1 betrifft einen Festbettreaktor für chemische oder biochemische Prozesse mit einem äußeren, festen Reaktorbehälter, einem Substrateinlass, einem Gasauslass, einem Produktauslass und mindestens einem Festbett, das in mehrere voneinander durch Zwischenwände getrennte Teilvolumina aufgeteilt ist. Diese Teilvolumina können zueinander parallel und/oder in Serie zueinander geschaltet sein. In Serie geschaltete Teilvolumina sind übereinander oder nebeneinander angeordnet.

Die DE 42 40 062 C2 betrifft einen Festbettreaktor zur biologischen Behandlung zur biologischen Behandlung von Abwasser mit einem festen Reaktorbehälter, der eine nach oben von einem umlaufenden Rand begrenzte seitliche Wandung und einen Boden aufweist. An dem Reaktorbehälter ist ein Zulauf für das Abwasser, ein aus einer regellosen Schüttung von Füllkörpern gebildetes Festbett sowie wenigstens eine Zwischenwand vorgesehen, die das Festbett in Teilvolumina aufteilt. Der Zuleitung für Luft ist im Bereich des Bodens unterhalb des Festbettes vorgesehen, ebenso wie ein Ablauf für das behandelte Abwasser, wobei der Zulauf aus einer Rinne gebildet ist, die mit dem Rand des Reaktorbehälters verbunden ist und sich oberhalb der Oberfläche des Festbettes wenigstens über Teilabschnitte des Randes erstreckt. Der Ablauf weist ein Sammelrohr auf, das in einem seitlichen Abstand von dem Überlauf auf dem Boden angeordnet ist und Eintrittsöffnungen für das behandelte Abwasser aufweist. Ein mit dem Sammelrohr in Verbindung stehendes, senkrechtes Steigrohr ist vorgesehen, das sich bis oberhalb der Oberfläche des Festbettes erstreckt. Das Steigrohr ist oben offen und mit einem Abflussrohr gekoppelt, das in einem Abstand unterhalb der Oberfläche des Festbettes in einen Sammelkanal mündet.

Nachteilig bei einem solchen Festbettreaktor ist die Tatsache, dass eine Kanalbildung im Festbett stattfindet, so dass nicht das gesamte Festbett für die biologische Reinigung genutzt wird. Vielmehr entstehen im Festbett Gebiete, die nicht oder nur unzureichend von dem Abwasserstrom erreicht werden. Die US-A-6,153,094 betrifft ein Verfahren und eine Vorrichtung zur Abwasserbehandlung in einem geschlossenen Tank mit einem Zufluss und einem Abfluss sowie innerhalb des Tanks angeordneten vertikalen Strömungshindernissen, die überströmt und unterströmt werden können. Innerhalb des Tanks ist ein Filtermedium eingebracht, das Filtermaterial weist unterschiedliche Korngrößen auf.

Die US 2009/0301973 A1 betrifft einen Reaktortank zur Behandlung von Wasser mit Flockungsmittel. Der Tank besitzt einen Zufluss, Abfluss und verschließbare Flockungsmittelöffnungen und wird durch Trennwände in Misch- und Reaktionsbereiche getrennt.

Die WO 93/02971 A1 betrifft ein Verfahren zum Entfernen organischer Belastungen aus Abwässern mit einem Festbettreaktor mit einem körnigen Füllmaterial aus porösem Polyurethan, das mit Aktivkohle beschichtet ist. In dem Aufbereitungsbehälter sind Trennwände vorgesehen, die überspült und unterspült werden können.

Aufgabe der vorliegenden Erfindung ist es, einen verbesserten Festbettreaktor bereitzustellen, mit dem eine verbesserte Ausnutzung des Füllmaterials des Festbettes erreicht wird, so dass eine höhere Reinigungsquote verwirklicht werden kann.

Erfindungsgemäß wird diese Aufgabe durch einen Festbettreaktor mit den Merkmalen des Hauptanspruches gelöst. Vorteilhafte Ausgestaltungen und Weiterbildungen der Erfindung sind in den Unteransprüchen, der Beschreibung sowie den Figuren gezeigt.

Der erfindungsgemäße Festbettreaktor zur Reinigung von Abwässern, insbesondere zur biologischen Reinigung industrieller Abwässer, mit einem Reaktorbehälter mit einem Boden und Wänden, die ein Becken bilden, in dem ein Festbett aus einem körnigen Füllmaterial angeordnet ist und das einen Zulauf für das zu reinigende Abwasser und einen Ablauf für das gereinigte Wasser aufweist, wobei in dem Becken Trennwände angeordnet sind, die den Abwasserstrom von dem Zulauf zu dem Ablauf mäanderartig umleiten, wobei die Trennwände in einer Ebene und/oder in der Höhe zueinander versetzt angeordnet sind und das Füllmaterial Aktivkoks oder eine Mischung aus Aktivkoks und einem porösen Werkstoff aufweist oder daraus besteht, sieht vor, dass sich die Schütthöhe des Füllmaterials über den Oberkanten der Trennwände befindet. Die Wände innerhalb des Beckens können in einer Ebene versetzt zueinander angeordnet sein, das heißt, dass sie sich auf einem gemeinsamen Höhenniveau befinden und insbesondere auf dem Boden aufsitzen, so dass der Abwasserstrom vom Zulauf nicht direkt zu dem Ablauf gelangen kann, sondern durch die Trennwände von der direkten Strömungsrichtung von dem Zulauf direkt zu dem Ablauf umgeleitet wird. Eine vertikale Umleitung ist dabei nicht zwangsweise notwendig, kann aber durch die Anordnung von Zulauf und Ablauf auf unterschiedlichen Niveaus bewirkt werden. Ebenso können Strömungshindernisse zwischen den Trennwänden angeordnet sein, um eine Umleitung auch in vertikaler Richtung zu bewirken.

Auch ist es möglich, dass sich die Trennwände im Wesentlichen quer und dabei vollständig von einer Seitenwand des Beckens zur anderen erstrecken und mit den Seitenwänden abschließen, wobei eine erste Seitenwand von dem Zulauf her gesehen auf dem Boden aufsetzt, während die nachfolgende zwischen dem Boden und der Unterkante der Trennwand einen Freiraum lässt, so dass eine vertikale Umleitung über die gesamte Breite der Strömungsrichtung von dem Zulauf zu dem Ablauf erfolgt. Diese Anordnungen können auch miteinander kombiniert werden, so dass eine horizontale Ableitung mit einer vertikalen Ableitung oder Umleitung kombiniert wird.

Die Erfindung sieht weiter vor, dass das Füllmaterial Aktivkoks aufweist oder daraus besteht. Aktivkoks hat den Vorteil einer hohen mechanischen Stabilität bei gleichzeitig hoher Absorptionsfähigkeit, so dass der Festbettreaktor über einen langen Zeitraum hinweg betrieben werden kann. Ebenfalls ist es möglich, dass das Füllmaterial eine Mischung aus Aktivkoks und einem weiteren oder mehreren porösen Werkstoffen besteht, beispielsweise Zeolith oder Lavatuff. Überraschend hat sich gezeigt, dass ein Mischbett von Aktivkoks mit Zeolith eine deutliche Verbesserung des biologischen Abbaus von organischen Verunreinigungen im Abwasser bewirkt, wodurch eine deutliche Steigerung der Leistung des Festbettreaktors bewirkt werden kann. Das Füllmaterial kann aus Aktivkoks oder einer Mischung aus Aktivkoks und einem porösen Werkstoff bestehen oder diese Füllmaterialien aufweisen.

Die Mischung des Füllmaterials mit einem porösen Material, insbesondere Zeolith, hat sich überraschend als vorteilhaft erwiesen, da durch die Zugabe des Zeoliths, insbesondere Clinoptilit ein unerwartet schneller Abbau der im Abwasser enthaltenen Schadstoffe erfolgt. Dadurch kann die Reinigung der Abwasser wesentlich wirtschaftlicher als bei einem Betrieb der Festbettreaktors mit ausschließlich Aktivkok erfolgen. Der Aktivkoksanteil der Mischung aus Aktivkoks und einem anderen, porösen Material, beispielsweise, Lavatuff und/oder Zeolith, insbesondere Clinoptilit natürlichen Ursprungs, beträgt zwischen 30% und 70%, eine Gleichverteilung der Mischung aus Aktivkoks und anderen Materialien ist ebenfalls vorgesehen.

Der Ablauf kann an der dem Zulauf gegenüberliegenden Wand des Beckens angeordnet und von dem Füllmaterial abgedeckt sein. Wenn der Ablauf von dem Füllmaterial abgedeckt ist, beispielsweise indem über dem Ablauf eine Siebvorrichtung angeordnet ist, wird durch die Überdeckung des Siebablaufes und die absorptive Wirkung des Füllmaterials, insbesondere des Aktivkoks', die Emission von Geruchsstoffen verhindert. Sofern das Füllmaterial nicht bis über das Niveau des Ablaufs aufgefüllt wird, schließt es mit dem Ablaufniveau ab, so dass das Füllmaterial vollständig von dem zu reinigenden Abwasser benetzt wird.

Die Oberkanten einiger der Trennwände können unterhalb des Ablaufs enden, so dass bei einer Überleitung des Abwassers über die Trennwände eine Reinigung der Abwässer auch oberhalb der Trennwände erfolgen kann. Bei einer höhenversetzten Anordnung der Trennwände ist es vorteilhaft, wenn die mit Abstand zum Boden angeordneten Trennwände mit ihrer Oberkante über das Niveau des Ablaufes hinausragen, so dass verhindert wird, dass sich Kanäle oberhalb der Trennwände bilden, durch die das zu reinigende Abwasser schnell abfließt, ohne die gesamte Fließstrecke durch das Festbett durchlaufen zu haben. Die auf dem Boden aufsitzenden Trennwände enden mit ihrer Oberkante unterhalb der Oberkante der hochgesetzten Trennwände.

Auf dem Boden oder in dem Boden des Beckens kann ein Rückspülsystem mit Leitungen vorgesehen sein, die Auslassöffnungen für eine Rückspülflüssigkeit aufweisen. Das Rückspülsystem ist mit zumindest einer Rückspülpumpe verbunden, so dass zur Regeneration des Festbettes Frischwasser oder gereinigtes Abwasser durch die Rückspülleitungen in das Festbett unter hohem Druck eingeleitet wird.

Der Zulauf kann quer zu einer Strömungsrichtung von dem Zulauf zu dem Ablauf orientiert sein, insbesondere ist der Zulauf als Rohr mit Auslassöffnungen oder als Rinne ausgebildet und erstreckt sich über die im Wesentlichen gesamte Breite des Beckens, so dass ein möglichst vollständiger und gleichmäßiger Eintrag des Abwassers über die gesamte Breite des Festbettes erfolgt. Als Strömungsrichtung wird die Richtung angesehen, die als direkte Verbindung von dem Zulauf zu dem Ablauf angesehen werden kann. Der Zulauf kann auf verschiedenen Höhenniveaus angeordnet sein, eine bevorzugte Variante bei einer vertikalen Umleitung ist die Anordnung des Zulaufs im Bodenbereich des Beckens, während der Ablauf unterhalb der Niveaus einiger der Oberkanten der Trennwände angeordnet ist.

Es kann zumindest eine Belüftungseinrichtung zur Einleitung von Luft oder anderen Gasen in dem Becken vorgesehen sein. Die Belüftungseinrichtung weist Leitungen in Gestalt von Schläuchen oder Rohren auf, die Auslassöffnungen aufweisen, durch die je nach Prozessführung für andere Gase oder Flüssigkeiten in das Becken eingeleitet werden können.

Das Füllmaterial weist eine durchschnittliche Körnung zwischen 2mmi und 10mm, insbesondere zwischen 2,5mm und 8 mm auf, was sich als besonders vorteilhaft für die Anlagerung der aus dem Abwasser zu entfernenden Komponenten. Ebenfalls hat sich gezeigt, dass in diesem Körnungsverhältnis eine gute mechanische Stabilität des Festbettes erreicht werden kann, ohne dass die Durchflussrate der Abwässer zu gering wird. Darüber hinaus ist das Abriebverhalten des Füllmaterials in diesem Körnungsbereich besonders positiv.

In einer Weiterbildung der Erfindung ist es vorgesehen, dass ein Reservoir für gereinigtes Wasser dem Becken zugeordnet ist und dass das Reservoir über eine Rückführleitung mit dem Becken verbunden ist. Das Reservoir kann als Abteilung innerhalb des Beckens angeordnet sein und steht strömungstechnisch mit dem Ablauf in Verbindung. Soll dass gereinigte Wasser zur Rückspülung genutzt werden, bietet sich ein relativ großes Reservoir an, das ausreichend dimensioniert ist, um im Rückströmverfahren das Festbett aufzulockern und die festgehaltenen Feststoffe und absorbierten Komponenten des Abwassers zu entfernen.

An dem Becken kann ein bodenseitiger Auslass angeordnet sein, der auch in dem Reservoir angeordnet sein kann. Über den bodenseitigen Auslass kann das gesamte im Festbettreaktor befindliche Abwasser oder gereinigtes Wasser abgelassen werden, um Wartungsarbeiten vornehmen zu können.

Der Ablauf kann höhenverstellbar an dem Becken gelagert sein, um beispielsweise eine dickere oder dünnere Füllmaterialschicht oberhalb des Ablaufes bereitzustellen, um eine Reinigung der Abluft zu bewirken.

Nachfolgend werden Ausführungsbeispiele anhand der beigefügten Figuren näher erläutert. Gleiche Bezugszeichen zeigen gleiche Bauteilen. Aus Gründen der Übersichtlichkeit wird nicht jedes Bezugszeichen in allen Figuren aufgeführt. Es zeigen:
- Figur 1 -: eine Draufsicht auf eine erste Ausführungsform des Festbettreaktors;
- Figur 2 -: eine senkrechte Schnittdarstellung durch den Festbettreaktor gemäß Figur 1;
- Figur 3 -: eine Variante der Figur 1;
- Figur 4 -: eine Variante der Figur 2;
- Figur 5 -: eine weitere Variante der Figur 1; sowie
- Figur 6 -: eine Variante der Figur 2.

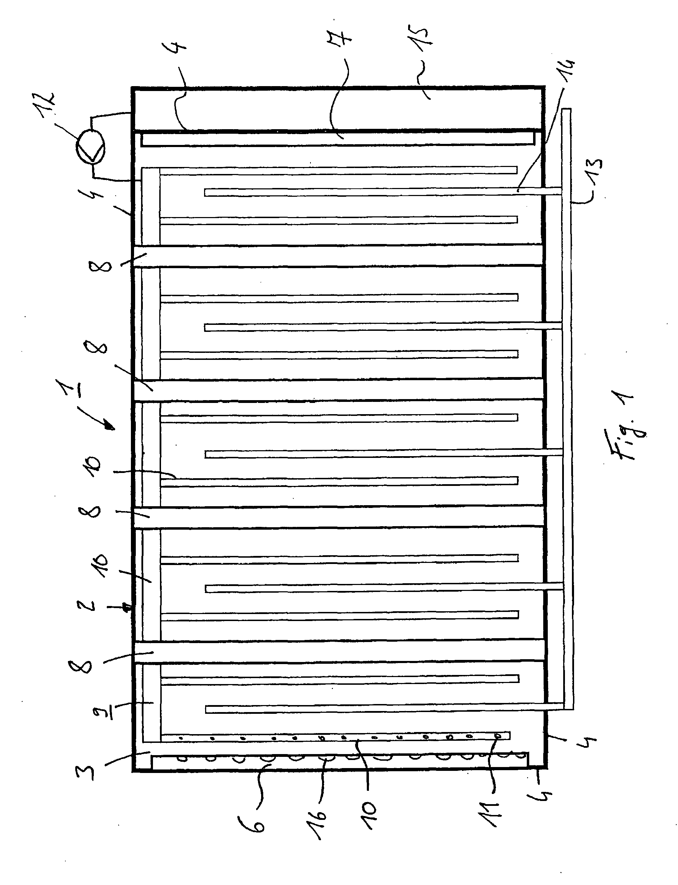

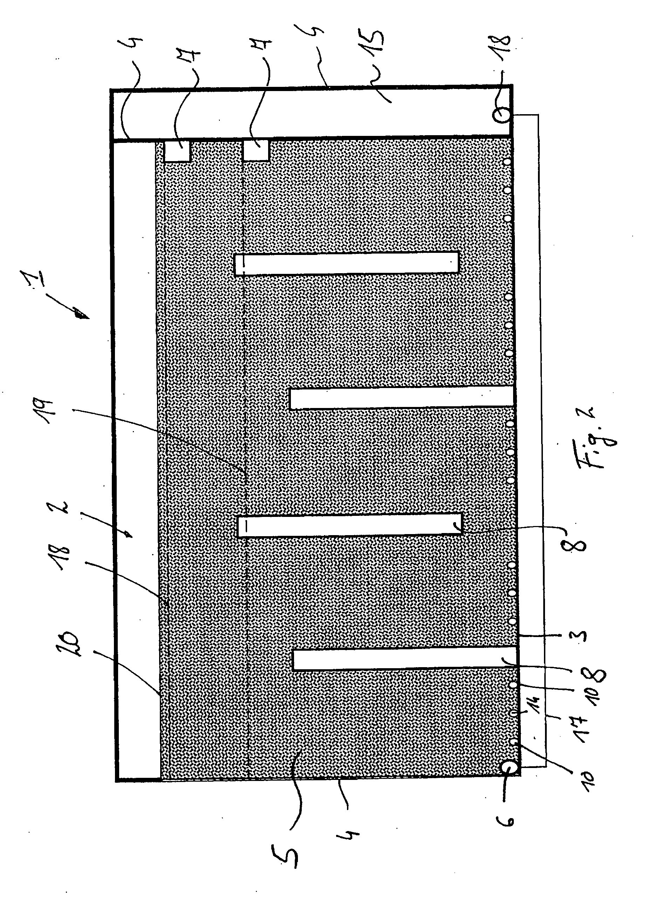

In der Figur 1 ist in Draufsicht ein Festbettreaktor zur Reinigung von Abwässern mit einem Reaktorbehälter 1 gezeigt. Der Reaktorbehälter weist einen Boden 3 und stabile Seitenwände 4 auf, die insgesamt ein Becken 2 bilden. Das Becken 2 kann eine Überdachung aufweisen. In dem Becken 2 ist ein körniges Füllmaterial 5 angeordnet, das in der Figur 2 dargestellt ist. Das körnige Füllmaterial bildet ein Festbett aus, so dass sich bei einer Befüllung des Beckens 2 mit einem Füllmaterial aus Aktivkoks ein Aktivkoks-Festbett-Bioreaktor ausbildet, der sich für die biologische Reinigung von industriellen Abwässern mit biologisch schwer abbaubaren Verunreinigungen eignet. Das Becken 2 ist im Wesentlichen rechteckig aufgebaut und weist zwei Langseiten und zwei Kurzseiten auf. An der in der Figur 1 linken Kurzseite ist ein Zulauf 6 angeordnet, der als Rohr oder Rinne ausgebildet ist und Auslassöffnungen 16 aufweist, durch die über im Wesentlichen die gesamte Breite des Beckens 2 das zu reinigende Abwasser in das Becken eingeleitet wird. Auf der dem Zulauf 6 gegenüberliegenden Kurzseite des Beckens 2 ist ein Ablauf 7 angeordnet, der sich ebenfalls über die gesamte Breite des Beckens 2 erstreckt. Die Richtung von dem Zulauf 6 zu dem Ablauf 7 ist die Strömungsrichtung des Abwassers.

Innerhalb des Beckens 2 sind in der dargestellten Ausführungsform 4 Trennwände angeordnet, die sich über die gesamte Breite des Beckens 2 erstrecken. Die Trennwände 8 unterteilen das Becken 2 in fünf Kammern, eine abweichende Kammerzahl kann vorgesehen sein.

Zusätzlich zu den Trennwänden 8, deren Funktion später näher erläutert wird, ist in dem Becken ein Rückspülsystem 9 vorgesehen, das Leitungen 10 aufweist, in denen Auslassöffnungen 11 für eine Rückspülflüssigkeit vorgesehen sind. Das Rückspülsystem 9 weist darüber hinaus eine Rückspülpumpe 12 auf, über die Rückspülflüssigkeit in die Rohre oder anderweitigen Leitungen 10 hineingepumpt werden kann. Das Rückspülsystem 9 erstreckt sich über die gesamte Länge des Beckens 2 und im Wesentlichen über die gesamte Breite, wobei die über die Breite verlaufenden Rohrleitungen 10 in Längsrichtung in einem Abstand zueinander angeordnet sind. Im vorliegenden Fall sind pro Kammer zwei quer verlaufende Leitungen 10 zum Einleiten von Rückspülflüssigkeit vorgesehen.

Auf der gegenüberliegenden langen Seite ist eine Belüftungseinrichtung 13 vorgesehen, die als Rohrleitung ausgebildet ist und mit einem Kompressor verbunden sein kann. Über diese Belüftungseinrichtung 13 mit dem Sammelrohr wird Luft in quer verlaufende Rohrleitungen 14 eingepresst, um die Bioaktivität innerhalb des Beckens 2 anzuregen. Auch hier sind die quer verlaufenden Rohrleitungen 14 im Wesentlichen gleichmäßig über die gesamte Länge des Beckens 2 verteilt, im dargestellten Ausführungsbeispiel pro Kammer eine Querleitung 14.

In Strömungsrichtung hinter dem Ablauf 7 ist ein Reservoir 15 an das Becken 2 angeschlossen, in das von dem Ablauf 7 das gereinigte Abwasser eingeleitet wird. Das Reservoir 15 kann über die Rückspülpumpe mit dem Rückspülsystem 9 gekoppelt sein, alternativ zu den gereinigten Abwässern kann auch Frischwasser oder eine andere Flüssigkeit durch die Rückspülpumpe in das Rückspülsystem 9 eingeleitet werden.

In der Figur 2 ist in einer Seitenansicht der Aufbau des Reaktorbehälters 1 gezeigt. In dem Becken 2 ist das Füllmaterial 5 in Gestalt von Aktivkoks oder Aktivkoks mit Beimischungen wie Zeolith, Clinoptilit oder Lavatuff eingebracht. Die Trennwände 8, die sich wie in Figur 1 gezeigt über die gesamte Breite des Beckens 2 erstrecken, sind in unterschiedlichen Höhen angebracht, die von dem Zulauf 6 in Strömungsrichtung gesehen erste Trennwand 8 sitzt auf dem Boden 3 des Beckens 2 auf, während die nachfolgende Trennwand 8 auf einem höheren Niveau angeordnet ist und zwischen dem Boden 3 und der Unterkante der Trennwand 8 ein Freiraum entsteht. Zugeleitetes Abwasser muss also über die erste Trennwand 8 hinwegströmen, um dann unter der zweiten Trennwand 8 hindurch durch das Füllmaterial 5 hindurchzuströmen. Die zweite Trennwand 8 endet auf einem höheren Niveau als die erste Trennwand 8. Die dritte Trennwand 8 befindet sich wieder auf dem Boden, die vierte auf dem Niveau der zweiten Trennwand 8. Der Figur 2 ist zu entnehmen, dass sich die Schütthöhe des Füllmaterials 5 über den Oberkanten der Trennwände befindet. Das Niveau 20 des Füllmaterials liegt auch unterhalb der Oberkante des Beckens. Unterhalb des Festbettniveaus 20 ist ein oberer Ablauf 7' angeordnet, der für den Rückspülbetrieb vorgesehen ist, was später erläutert werden wird. Ein zweiter, unterer Ablauf 7 ist ebenfalls an der Schmalseite des Beckens 2 gegenüber dem Zulauf 6 angeordnet, der zweite, unter Ablauf 7 ist für den kontinuierlichen Reinigungsbetrieb vorgesehen. Die Niveaus 18, 19 der Abläufe 7, 7' liegen unterhalb des Niveaus 20 des Festbettes, so dass das Füllmaterial 5 den mit einem Siebgeflecht oder einer anderen Konstruktion für Flüssigkeiten durchlässig abdeckten Ablauf 7, 7' von dem Füllmaterial 5 abgedeckt ist. Dadurch werden Geruchsbelästigungen vermieden. Von dem unteren Ablauf 7 wird das geklärte Abwasser in das Reservoir 15 geleitet, bei dem Rückspülablauf 7' erfolgt eine gesonderte Ableitung, ggf. in einen Sammeltank oder ein Sammelbecken. Das Niveau des unteren Ablaufs 7 liegt oberhalb des Niveaus der Oberkanten der auf dem Boden aufsetzenden Trennwände 8 und unterhalb des Niveaus der Oberkanten der hochgesetzten Trennwände 8, bei denen zwischen der Unterkante und dem Boden 3 ein Freiraum ausgebildet ist.

Auf dem Boden 3 des Beckens 2 sind die Rohrleitungen 10 des Rückspülsystems 9 zu erkennen, die im Wesentlichen parallel zueinander verlegt sind. Zwischen zwei Rohren 10 den Rückspülsystems ist ein Belüftungsrohr 14 zu erkennen.

In dem Reservoir 15 ist an dem unteren Ende ein bodenseitiger Auslass 18 angeordnet, der mit einer Rückführleitung 17 mit dem Einlass 6 verbunden ist. In der Rückführleitung 17 kann eine Druckerhöhungspumpe angeordnet sein, so dass gereinigtes Abwasser aus dem Reservoir 15 zurück zum Zulauf 6 gepumpt werden kann. Die Pumpe hierzu ist nicht dargestellt.

Üblichweise ist der Reaktorbehälter 1 mit Aktivkoks oder einer Mischung aus Aktivkoks und einem weiteren porösen Material in einer Höhe zwischen zwei Metern und drei Metern befüllt, die Füllhöhe ergibt sich aus den Abmessungen des Reaktorbehälters 1 und der Beschaffenheit sowohl des Füllmaterials 5 als auch der Abwässer. Eine bevorzugte Körnung für das Füllmaterial 5 liegt bei 2,5 bis 8 mm. Die zu reinigenden Abwässer werden über den Zulauf 6, der in dem dargestellten Beispiels als ein auf dem Boden 3 angeordnetes Zulaufrohr mit Einströmöffnungen 16 ausgebildet ist eingeleitet. Der Zulauf 6 kann auch als eine Zulaufrinne ausgebildet sein. Das Abwasser wird durch den Zulauf 6 solange in die erste Kammer, die durch die erste Trennwand 8 abgetrennt ist, zugeleitet, bis die Oberkante der ersten Trennwand 8 erreicht ist. Dann wird aufgrund der Schwerkraft das Abwasser in die zweite Kammer strömen, die zwischen der ersten Trennwand 8 und der zweiten Trennwand 8 ausgebildet ist. Von dort wird das Abwasser unter der zweiten Trennwand 8 durchströmen, bis auch die dritte Kammer, die zwischen der zweiten und der dritten Trennwand 8 ausgebildet ist, gefüllt ist, so dass das zu reinigende Abwasser über die dritte Trennwand 8 wegströmen muss, um in die nächste Kammer zu gelangen. Das Abwasser strömt dann unter der letzten Trennwand 8 hindurch und steigt solange an, bis das Niveau 19 des unteren Ablaufs 7 erreicht wird. Der Figur 2 ist zu entnehmen, dass die Oberkanten der angehobenen Trennwände 8, also der zweiten und vierten Trennwand 8, oberhalb des Einlaufniveaus 19 des unteren Ablaufs 7 liegen. Dadurch wird verhindert, dass das Abwasser nur oberflächlich auf dem Niveau des unteren Ablaufs 7 entlang läuft und nicht mäanderartig nach oben und unten abgelenkt wird, um den gesamten, verlängerten Weg durch das Festbett aus Füllmaterial 5 zu durchlaufen. Die Strömung des Abwassers durch den Festbettreaktor kann durch eine Luftführung mit Hilfe der am Boden 3 des Beckens 2 befindlichen Belüftungsrohre 14 unterstützt werden. Die Belüftungsrohre 14 können für die einzelnen Kammern des Festbettbioreaktors unterschiedlich eingestellt werden.

Der Ablauf des gereinigten Abwassers erfolgt über den mit einem Siebgeflecht abgedeckten unteren Ablauf 7, der als Ablaufrinne ausgebildet ist und höhenverlagerbar ausgebildet sein kann.

Das Rückspülsystem 9 ermöglicht die Entfernung eines sogenannten Überschussschlammes, der durch die Vermehrung der Bakterien oder durch abfiltrierte Stoffe aus dem Abwasser entsteht. Die Rückspülrohre 10 werden über die Rückspülpumpe 12 mit Frischwasser oder gereinigtem Abwasser beaufschlagt, so dass die im Festbett des Füllmaterials 5 festgehaltenen Feststoffe entgegen der üblichen Strömungsrichtung ausgespült werden. Während der Dauer der Rückspülung wird der Zulauf 6 gesperrt und der untere Ablauf 7 für gereinigtes Wasser unterbrochen.

Durch eine geeignete Anordnung von Pumpen und Ventilen kann der Festbettreaktor sowohl im Durchlauf als auch im Chargenbetrieb betrieben werden.

Für den Durchlaufbetrieb wird aus einem Abwasserreservoir mittels einer Schmutzwasserpumpe zu reinigendes Abwasser in den Zulauf 6 gefördert. Die Pumpe kann drehzahlgesteuert sein, damit eine konstante Durchlaufmenge des Abwassers dem Festbettreaktor zugeführt wird. Durch die Trennwände 8 strömt das Abwasser durch das Festbett jeweils nach oben bzw. nach unten. Die gegebenenfalls zuzuführende Luftmenge über das Belüftungssystem 13, 14 wird über eine Messeinrichtung gemessen und kann über ein Handventil oder ein Regelventil eingestellt werden. Dadurch ist es möglich, die Kammern unterschiedlich zu belüften. Es ist vorgesehen, dass das Niveau 20 des Festbettes so ausgelegt ist, dass der obere Wasserspiegel stets bedeckt ist, also dass das Niveau 19, 18 der Ablaufe 7, 7' stets unterhalb des Niveaus 20 des Füllmaterials liegt. Die Höhe des Niveaus 18, 19 des jeweiligen Ablaufs 7, 7' bestimmt den normalen Wasserstand in dem Reaktorbehälter 1 je nach Betriebsart.

Durch die Belüftung kann die Versorgung des Biofilms, der sich auf dem Füllmaterial 5 bildet, mit Sauerstoff sichergestellt werden und der biologische Abbau der in den Abwässern enthaltenden Komponenten sichergestellt werden. Durch die Menge der Luft, die in den einzelnen Kammern in dem Reaktorbehälter 1 zugeführt wird, wird auch die Strömung beeinflusst, so dass auch die Fördermenge des Abwassers und der Durchsatz des zu reinigenden Abwassers beeinflusst wird.

Bei der Rückspülung wird die Strömungsgeschwindigkeit soweit erhöht, dass die Partikel des Füllmaterials 5 leicht angehoben werden, um die zwischen den Teilchen oder Partikeln des Füllmaterials befindlichen Feststoffe auszuspülen. Das Spülwasser fließt über eine separate, mit einem Sieb abgedeckte Rinne als oberer Ablauf 7' in eine separate Ablaufleitung.

Für den Chargenbetrieb wird der Festbettreaktor über die Rückspülpumpe 12 aus einem Wasserreservoir befüllt, bis ein vorher bestimmter Füllstand innerhalb des Reaktorbehälters 1 erreicht ist. Der Füllstand kann über einen Höhensensor gemessen werden. Anschließend wird kein neues Abwasser zugeführt, vielmehr wird mit einer Förderpumpe für Abwasser durch geeignete Ventilsteuerung das im Reaktorbehälter 1 befindliche Abwasser im Kreislauf über das Festbett gefördert, gegebenenfalls unter Belüftung durch das Belüftungssystem. Nach Ablauf der vorgesehenen Chargenlaufzeit wird über ein Leerungssystem, beispielsweise einen bodenseitigen Abfluss 18' innerhalb des Beckens 2, das gereinigte Abwasser entfernt. Danach kann die Befüllung erneut beginnen. Durch eine speicherprogrammierbare Steuerung kann der Chargenbetrieb automatisiert werden.

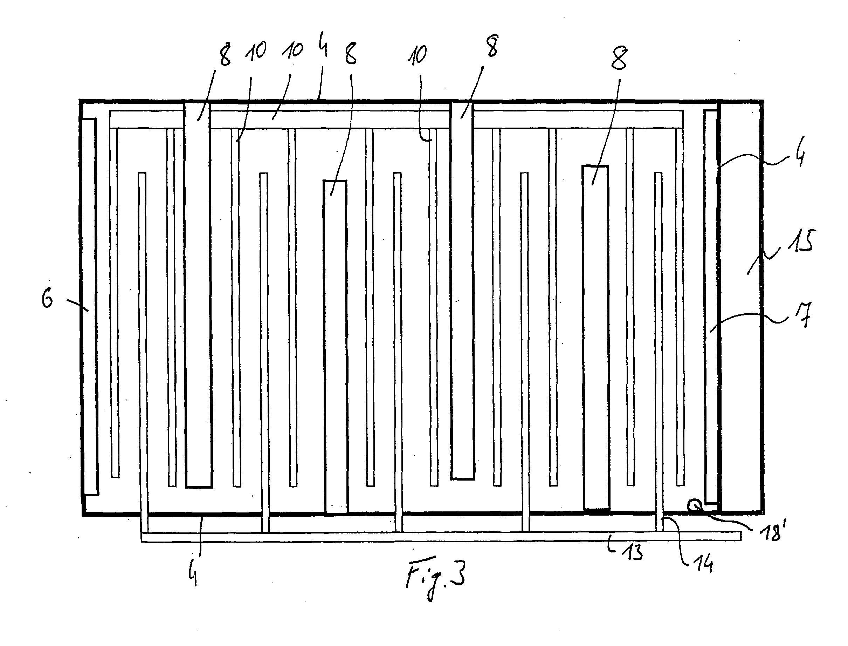

In der Figur 3 ist eine Variante des Aufbaus des Festbettreaktors gezeigt, bei der die Trennwände einen seitlichen Versatz haben, so dass eine Strömung von der ersten Kammer durch den Zwischenraum zwischen der Trennwand 8 und der Seitenwand 4 hindurchgeführt werden muss, bei der nachfolgenden Trennwand liegt der Freiraum zwischen der Seitenwand 4 und der Trennwand 8 auf der gegenüberliegenden Seite. Die Strömung wird also somit von rechts nach links umgelenkt und gelangt dann in die letzte Kammer und dann in den Ablauf 7. In der Figur 3 ist in Draufsicht der Abfluss 18' als bodenseitige Auslassöffnung für den Chargenbetrieb eingezeichnet.

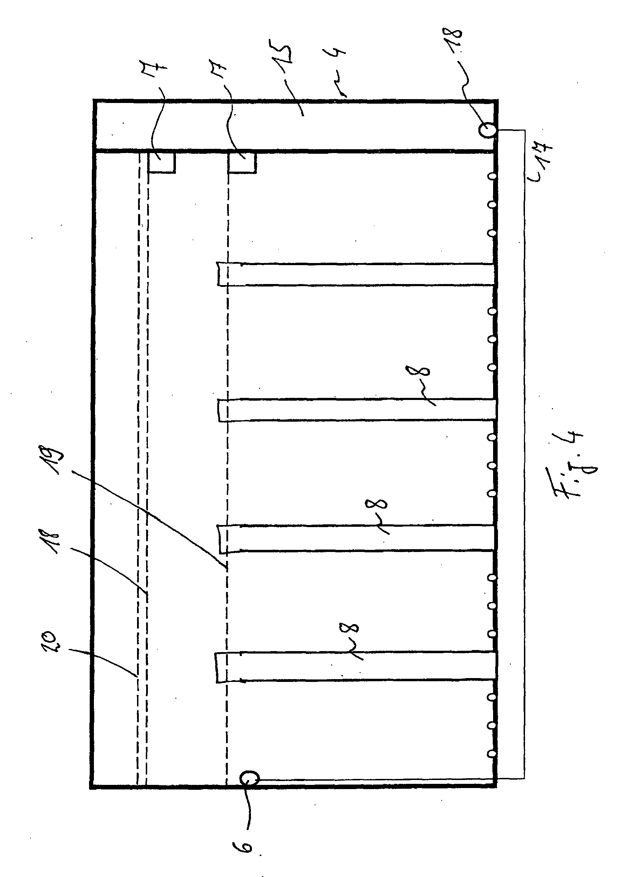

In der Figur 4 ist zu erkennen, dass die Trennwände 8 alle bis auf den Boden 3 reichen.

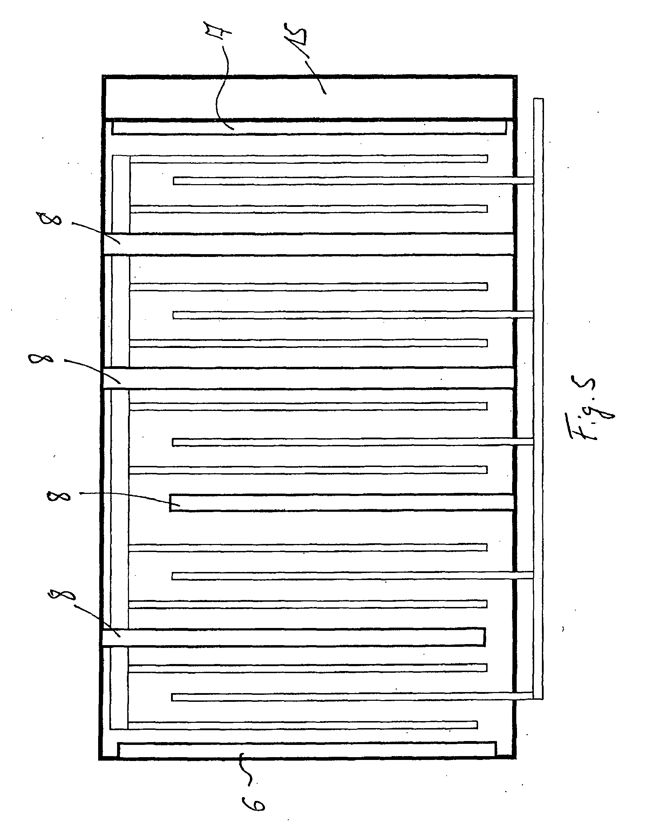

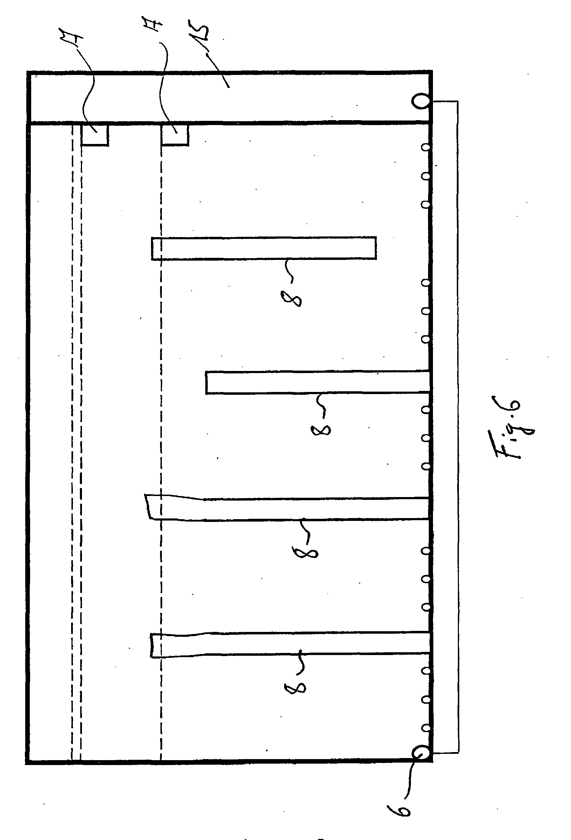

In den Figuren 5 und 6 ist eine Kombination der Ausführungsform des Figuren 1 und 2 sowie 3 und 4 dargestellt. Die ersten beiden Trennwände 8 entsprechen der Ausführungsform gemäß der Figuren 3 und 4, die dritte Trennwand sperrt über die gesamte Breite, so dass das zu reinigende Abwasser über die Trennwand 8 hinwegströmen muss und anschließend unter der letzten Trennwand 8 hindurch bis zum Ablauf 7. Die ersten beiden Trennwände 8 sowie die letzte Trennwand 8 liegen mit ihrer Oberkante oberhalb des Niveaus des Ablaufs 7, die Oberkante der dritten Trennwand 8 liegt unterhalb des Niveaus des Ablaufs 7.

## Patentansprüche

1. Festbettreaktor zur Reinigung von Abwässern, insbesondere zur biologischen Reinigung industrieller Abwässer, mit einem Reaktorbehälter (1) mit einem Boden (3) und Wänden (4), die ein Becken (2) bilden, in dem ein Festbett aus einem körnigen Füllmaterial (5) angeordnet ist und das einen Zulauf (6) für das zu reinigende Abwasser und einen Ablauf (7) für das gereinigte Abwasser aufweist, und in dem Becken (2) Trennwände (8) angeordnet sind, die den Abwasserstrom von dem Zulauf (6) zu dem Ablauf (7) mäanderartig umleiten, wobei die Trennwände (8) in einer Ebene und/oder in der Höhe zueinander versetzt angeordnet sind und das Füllmaterial (5) Aktivkoks oder eine Mischung aus Aktivkoks und einem porösen Werkstoff aufweist oder daraus besteht, **dadurch gekennzeichnet, dass** sich die Schütthöhe des Füllmaterials (5) über den Oberkanten der Trennwände (8) befindet.

2. Festbettreaktor nach Anspruch 1, **dadurch gekennzeichnet, dass** der poröse Werkstoff aus einer Gruppe ausgewählt ist, umfassend Zeolith, Clinoptilit und Lavatuff.

3. Festbettreaktor nach Anspruch 1 oder 2, **dadurch gekennzeichnet, dass** die Mischung aus Aktivkoks und Zeolith und/oder Lavatuff einen Anteil von 30% bis 70% Aktivkoks aufweist.

4. Festbettreaktor nach einem der voranstehenden Ansprüche, **dadurch gekennzeichnet, dass** der Ablauf (7) an der dem Zulauf (6) gegenüberliegenden Wand (4) des Beckens (2) angeordnet und von dem Füllmaterial (5) abgedeckt ist oder mit dem Füllmaterial (5) niveaugleich abschließt.

5. Festbettreaktor nach einem der voranstehenden Ansprüche, **dadurch gekennzeichnet, dass** die Oberkanten der Trennwände (8) unterhalb des Ablaufes (7) enden.

6. Festbettreaktor nach einem der voranstehenden Ansprüche, **dadurch gekennzeichnet, dass** auf oder in dem Boden (3) des Beckens (2) ein Rückspülsystem (9) mit Leitungen (10), die Auslassöffnungen (11) für eine Rückspülflüssigkeit aufweisen und mit zumindest einer Rückspülpumpe (12) verbunden sind vorgesehen ist.

7. Festbettreaktor nach einem der voranstehenden Ansprüche, **dadurch gekennzeichnet, dass** der Zulauf (6) quer zu einer Strömungsrichtung von dem Zulauf (6) zu dem Ablauf (7) orientiert ist, insbesondere als Rohr mit Auslassöffnungen (16) und/oder als Rinne.

8. Festbettreaktor nach einem der voranstehenden Ansprüche, **dadurch gekennzeichnet, dass** zumindest eine Belüftungseinrichtung (13, 14) zur Einleitung von Luft oder anderen Gasen in dem Becken (2) vorgesehen ist.

9. Festbettreaktor nach einem der voranstehenden Ansprüche, **dadurch gekennzeichnet, dass** das Füllmaterial (5) eine durchschnittliche Körnung zwischen 2mm und 10mm, insbesondere 2,5mm und 8mm aufweist.

10. Festbettreaktor nach einem der voranstehenden Ansprüche, **dadurch gekennzeichnet, dass** ein Reservoir (15) für gereinigtes Wasser dem Becken (2) zugeordnet ist und dass das Reservoir (15) über eine Rückführleitung (17) mit dem Becken (2) verbunden ist.

11. Festbettreaktor nach einem der voranstehenden Ansprüche, **dadurch gekennzeichnet, dass** an dem Becken (2) ein bodenseitiger Auslass (18) angeordnet ist.

12. Festbettreaktor nach einem der voranstehenden Ansprüche, **dadurch gekennzeichnet, dass** der Ablauf (7) höhenverstellbar an dem Becken (2) gelagert ist.

## Claims

1. Fixed bed reactor for purifying waste waters, in particular for biological purification of industrial waste waters, having a reactor container (1) with a base (3) and walls (4) which form a tank (2) in which a fixed bed of a granular packing material (5) is arranged and which has an inlet (6) for the waste water that is to be purified and an outlet (7) for the purified waste water, and in the tank (2), partition walls (8) are arranged which divert the waste water stream from the inlet (6) to the outlet (7) in a meander-like manner, wherein the partition walls (8) are arranged offset from one another in a plane and/or in height and the packing material (5) has or consists of activated carbon or a mixture of activated carbon and a porous material, **characterized in that** the bed height of the packing material (5) is situated above the upper edges of the partition walls (8).

2. Fixed bed reactor according to Claim 1, **characterized in that** the porous material is selected from a group consisting of zeolite, clinoptilite and lava tuff.

3. Fixed bed reactor according to Claim 1 or 2, **characterized in that** the mixture of activated carbon and zeolite and/or lava tuff has a fraction of 30% to 70% activated carbon.

4. Fixed bed reactor according to any one of the preceding claims, **characterized in that** the outlet (7) is arranged on the tank (2) wall (4) opposite to the inlet (6) and is covered by the packing material (5) or is closed up at the same level with the packing material (5).

5. Fixed bed reactor according to any one of the preceding claims, **characterized in that** the top edges of the partition walls (8) end below the outlet (7).

6. Fixed bed reactor according to any one of the preceding claims, **characterized in that** on or in the base (3) of the tank (2) a backwash system (9) is provided with conduits (10) that have outlet openings (11) for a backwash liquid and are connected to at least one backwash pump (12).

7. Fixed bed reactor according to any one of the preceding claims, **characterized in that** the inlet (6) is orientated transversally to a direction of flow from the inlet (6) to the outlet (7), in particular as a tube having outlet openings (16) and/or as a channel.

8. Fixed bed reactor according to any one of the preceding claims, **characterized in that** at least one aeration appliance (13, 14) is provided for the introduction of air or other gases in the tank (2).

9. Fixed bed reactor according to any one of the preceding claims, **characterized in that** the packing material (5) has an average grain size between 2 mm and 10 mm, in particular 2.5 mm and 8 mm.

10. Fixed bed reactor according to any one of the preceding claims, **characterized in that** a reservoir (15) for purified water is assigned to the tank (2), and **in that** the reservoir (15) is connected to the tank (2) via a return conduit (17).

11. Fixed bed reactor according to any one of the preceding claims, **characterized in that** a base-side outlet (18) is arranged on the tank (2).

12. Fixed bed reactor according to any one of the preceding claims, **characterized in that** the outlet (7) is mounted height-adjustably on the tank (2).

## Revendications

1. Réacteur à lit fixe pour purifier des eaux usées, en particulier pour la purification biologique d'eaux usées industrielles, comprenant un récipient de réacteur (1) avec un fond (3) et des parois (4), qui forment un bassin (2) dans lequel est agencé un lit fixe en un matériau de remplissage (5) en granulés, et qui comprend une admission (6) pour les eaux usées à purifier et une évacuation (7) pour les eaux usées purifiées, et des parois de séparation (8) sont agencées dans le bassin (2), qui dévient le courant des eaux usées à la manière de méandres depuis l'admission (6) jusqu'à l'évacuation (7), dans lequel les parois de séparation (8) sont agencées de façon décalée les unes par rapport aux autres dans un plan et/ou dans la hauteur, et le matériau de remplissage (5) comprend ou est constitué de charbon actif ou d'un mélange de charbon actif et d'un matériau poreux,
**caractérisé en ce que** la hauteur de déversement du matériau de remplissage (5) se trouve au-dessus des arêtes supérieures des parois de séparation (8).

2. Réacteur à lit fixe selon la revendication 1, **caractérisé en ce que** le matériau poreux est choisi parmi un groupe qui comprend les zéolithes, clinoptilite et tuf volcanique.

3. Réacteur à lit fixe selon la revendication 1 ou 2, **caractérisé en ce que** le mélange de charbon actif et de zéolithe et/ou de tuf volcanique comprend une part de 30 % à 70 % de charbon actif.

4. Réacteur à lit fixe selon l'une des revendications précédentes, **caractérisé en ce que** l'évacuation (7) est agencée sur la paroi (4) du bassin (2) à l'opposé de l'admission (6), et est recouverte par le matériau de remplissage (5) ou bien le matériau de remplissage (5) se raccorde au même niveau.

5. Réacteur à lit fixe selon l'une des revendications précédentes, **caractérisé en ce que** les arêtes supérieures des parois de séparation (8) se terminent au-dessus de l'évacuation (7).

6. Réacteur à fixe selon l'une des revendications précédentes, **caractérisé en ce qu'**il est prévu sur le fond ou dans le fond (3) du bassin (2) un système de rinçage par retour (9) avec des conduits (10), qui comportent des ouvertures d'évacuation (11) pour un liquide de rinçage par retour et qui sont reliés à au moins une pompe de rinçage (12).

7. Réacteur à fixe selon l'une des revendications précédentes, **caractérisé en ce que** l'admission (6) est orientée perpendiculairement à une direction d'écoulement de l'admission (6) jusqu'à l'évacuation (7), en particulier sous forme de tube avec des ouvertures d'évacuation (15) et/ou sous forme de goulotte.

8. Réacteur à fixe selon l'une des revendications précédentes, **caractérisé en ce qu'**il est prévu au moins un système de mise à l'air (13, 14) pour l'introduction d'air ou d'autres gaz dans le bassin (2).

9. Réacteur à fixe selon l'une des revendications précédentes, **caractérisé en ce que** le matériau de remplissage (5) présente une granulométrie moyenne entre 2 mm et 10 mm, en particulier entre 2,5 mm et 8 mm.

10. Réacteur à fixe selon l'une des revendications précédentes, **caractérisé en ce qu'**un réservoir (15) pour de l'eau purifiée est associé au bassin (2), et **en ce que** le réservoir (15) est relié au bassin (2) via un conduit de retour (17).

11. Réacteur à fixe selon l'une des revendications précédentes, **caractérisé en ce qu'**une évacuation (15) du côté de fond est agencée dans le bassin (2).

12. Réacteur à fixe selon l'une des revendications précédentes, **caractérisé en ce que** l'évacuation (7) est montée de manière réglable en hauteur sur le bassin (2).
